# FASCICULE DE BREVET EUROPEEN

(11) **EP 2 269 166 B1**
(45) Date de publication et mention de la délivrance du brevet: **16.01.2013**
(21) Numéro de dépôt: 09754047.0
(22) Date de dépôt: 23.03.2009
(51) Int. Cl.: G06K 19/073

(54) **SYSTEME ANTIFALSIFICATION DE DOCUMENTS MUNIS D'UN DISPOSITIF DE RADIOIDENTIFICATION**
MIT EINER FUNKIDENTIFIKATIONSVORRICHTUNG AUSGESTATTETES FÄLSCHUNGSSCHUTZSYSTEM FÜR DOKUMENTE
ANTI-COUNTERFEIT SYSTEM FOR DOCUMENTS PROVIDED WITH A RADIO-IDENTIFICATION DEVICE

(30) Priorité: 21.03.2008 FR 0801589
(43) Date de publication de la demande: 05.01.2011
(73) Titulaire: Oberthur Technologies, 92300 Levallois Perret (FR)
(72) Inventeur: BORDE, Xavier, F-35410 Osse (FR); ANSEL, Benoît, F - 33400 Talence (FR); LE BOZEC, Hubert, F-35135 Chantepie (FR); REAU, Régis, F-35520 La Chapelle des Fougeretz (FR)
(74) Mandataire: Oudin, Stéphane
(86) Numéro de dépôt international: PCT/FR2009/000312
(87) Numéro de publication internationale: WO 2009/144397

(56) Documents cités:
- WO-A-01/31558
- WO-A-2006/042967

## Description

La présente invention a pour objet un système antifalsification de documents munis d'un dispositif de radioidentification, ledit dispositif étant constitué d'une antenne reliée à une puce électronique (ou circuit intégré) renfermant des informations relatives audit document.

Plus particulièrement, l'invention concerne les documents d'identité comme par exemple un passeport, une carte d'identité ou un permis de conduire, dits « électroniques », comportant un dispositif de radioidentification (RFID), qui répond notamment à la norme ISO 14443, dont la puce électronique renferme certaines données biométriques du titulaire dudit document d'identité. Ces moyens électroniques sont intégrés aux documents d'identité afin d'en renforcer leur sécurité et leur authenticité ; ils viennent compléter les moyens de sécurité physiques intégrés à ces documents afin d'assurer leur validité et leur authenticité, tels que par exemple filigranes, hologrammes, fils de sécurité et autres impressions de haute sécurité (taille douce, sérigraphie, etc.).

Les autorités émettrices de ces documents avec puce électronique intégrée ont prévu que ces documents restent légalement valables en cas de défaillance de la puce ou du système de lecture des données contenues dans cette puce. Dans ces cas de figure, l'authenticité de ces documents repose alors sur les seuls éléments de sécurité physiques, comme c'est le cas aujourd'hui pour les documents sans composants électroniques. Or, malgré la complexité de leur élaboration, ces éléments de sécurité physique sont la cible de contrefaçons ou de tentatives de falsification dont les plus réussies sont trompeuses pour les personnes en charge du contrôle en première ligne de ces documents d'identité, agents des forces de l'ordre ou des douanes notamment.

Le risque existe donc que les composants électroniques de ces documents soient volontairement invalidés afin de procéder à la falsification « traditionnelle » des éléments de sécurité physique de ces documents. Or il s'avère que les puces électroniques des dispositifs RFID peuvent être rendues inopérantes de manière non intrusive, c'est à dire sans dommage physique apparent sur le document ou la puce électronique, par simple exposition à un rayonnement micro-onde d'une durée de quelques secondes, par exemple en irradiant pendant 3 à 5s à une puissance de 850W à 1000W le document dans un four à micro-ondes disponible dans le commerce et normalement destiné à un usage alimentaire ou culinaire. Ainsi par exemple, le brevet taïwanais TW225271B divulgue une telle méthode pour l'invalidation de composants électroniques.

Le document FR2890213 décrit un document muni d'un dispositif de radio-identification, ledit dispositif étant constitué d'une antenne reliée à une puce électronique renfermant des informations relatives audit document, par exemple les données biométriques du détenteur d'un document d'identité tel qu'un passeport, une carte d'identité ou un permis de conduire. Aucun moyen de prévention de la falsification par exposition du document à un rayonnement micro-onde n'est prévu.

A la connaissance de la Demanderesse, il n'existe à ce jour aucun moyen pour identifier de manière irréfutable ce type de dégradation ou tentative de dégradation volontaire de la puce électronique d'un document comportant un dispositif RFID en vue de procéder à la falsification dudit document.

L'un des buts de la présente invention est donc de proposer un système antifalsification obviant à ce problème.

A cet égard et conformément à l'invention, il est proposé un système antifalsification de documents munis d'un dispositif de radioidentification, ledit dispositif étant constitué d'une antenne reliée à une puce électronique renfermant des informations relatives audit document, par exemple les données biométriques du détenteur d'un document d'identité tel qu'un passeport, une carte d'identité ou un permis de conduire, ladite puce étant susceptible d'être rendue inopérante à des fins frauduleuses suite à son exposition à un rayonnement micro-onde d'une durée de quelques secondes ; ce système est remarquable en ce qu'il est prévu sur ou dans ledit document un ou plusieurs ensemble(s) de révélation d'exposition aux micro-ondes, chaque ensemble étant constitué, d'une part, d'une substance active apte à passer de manière visible et irréversible d'un premier état stable à un second état stable par réaction chimique déclenchée par un rayonnement micro-onde, cette transformation entraînant une modification physique définitive du document et rendant identifiable la tentative d'invalidation de ladite puce électronique suite à son exposition à un rayonnement micro-onde et, d'autre part, d'un élément catalyseur réalisé en matériaux conducteurs, destiné à rendre effective et totale la réaction de transformation de la substance active sur la durée minimale d'exposition aux micro-ondes nécessaire à l'invalidation de ladite puce électronique.

Par quelques secondes, on entend dans le présent texte une durée d'exposition aux micro-ondes comprise entre 0,1 et 10 secondes, de préférence de 3 à 5 secondes.

Selon une variante de l'invention, l'élément catalyseur se présente sous la forme d'une antenne linéaire réalisée par sérigraphie. De manière avantageuse, l'antenne linéaire est accordée à un multiple ou un sous-multiple de la longueur d'onde du rayonnement de fréquence 2,45 GHz, de sorte à former un dispositif de captation du rayonnement micro-onde visant à l'invalidation de la puce électronique.

Selon une première variante préférée de l'invention, la substance active est apte à changer de couleur sous l'effet d'un rayonnement micro-ondes en passant d'une forme non π-conjuguée à une forme π-conjuguée.

Selon une seconde variante préférée de l'invention, la substance active est apte à libérer un gaz suite à une réaction chimique de ladite substance active déclenchée par ledit rayonnement micro-ondes d'invalidation de la puce électronique auquel elle est exposée, ledit gaz étant libéré dans une quantité et à une vitesse telles que l'aspect des documents est dégradé, cette dégradation rendant identifiable la tentative d'invalidation de ladite puce électronique. De préférence, la substance active comprend au moins une fonction apte à libérer une molécule de diazote lors de l'exposition au rayonnement micro-ondes externe, ladite fonction étant choisie parmi le groupe comprenant les fonctions diazoïque, diazonium et azoture.

On comprend bien que le système selon l'invention permet de créer de façon certaine sur le document d'identité une trace irréversible et identifiable témoignant d'une exposition aux micro-ondes d'une durée de quelques secondes, ayant pour but de neutraliser de façon non visible la puce RFID du document ; la tentative de falsification est ainsi repérable par des personnes chargées du contrôle de ces documents, par exemple des agents des douanes.

D'autres avantages et caractéristiques de l'invention ressortiront mieux de la description détaillée qui va suivre.

L'invention met en oeuvre une substance active apte à passer de manière visible et irréversible d'un premier état stable à un second état stable par réaction chimique déclenchée par un rayonnement micro-onde. De telles substances sont par exemple connues des demandes de brevet WO2006/042967 et FR06.09074 (publiée FR2907137). Toutefois, les vitesses de transformation de ces substances connues sous irradiation micro-onde, lorsqu'elles sont placées dans un four à micro-onde à usage culinaire d'une puissance de 850 à 1000W, sont supérieures à la dizaine de seconde voire proche de la minute pour certaines.

La demanderesse a pu mettre en évidence que la vitesse de transformation chimique de l'état initial à l'état final des substances actives était accélérée par un apport d'énergie thermique, cette accélération s'avérant suffisante pour aboutir à une transformation des substances actives en quelques secondes d'irradiation, soit la fenêtre de temps visée.

Cet apport d'énergie thermique est délivré aux substances actives par contact direct, irradiation ou convection via un élément catalyseur réalisé en matériaux conducteurs : en effet, les éléments conducteurs exposés dans un rayonnement micro-onde libèrent de l'énergie thermique.

Selon une caractéristique de l'invention, les matériaux conducteurs de l'élément catalyseur sont choisis parmi : les métaux, les matériaux semi-conducteurs, les nanotubes de carbone. En particulier, on utilisera de la pâte d'argent, de cuivre ou de carbone conducteur telle qu'utilisée pour la sérigraphie de circuits imprimés.

Selon une variante de l'invention, l'élément catalyseur se présente sous la forme d'une antenne linéaire réalisée par sérigraphie. En particulier, l'élément catalyseur est réalisé par sérigraphie avec une encre argent d'épaisseur comprise entre 5 et 25µm, préférentiellement 15µm. Une autre possibilité de réalisation est d'utiliser un film de dorure métallisé, notamment en aluminium ou en cuivre.

Selon une variante de l'invention, l'élément catalyseur comporte à l'une des extrémités de l'antenne une charge terminale adaptée à l'impédance caractéristique de celle-ci, ladite charge étant réalisée par un dépôt sérigraphique de carbone conducteur et/ou d'argent. Cette configuration permet avantageusement d'éviter une détérioration trop rapide de l'antenne et en outre, permet d'accroître les effets thermiques qui se produisent sous l'influence du rayonnement micro-onde.

Selon une variante particulièrement avantageuse de l'invention, l'antenne linéaire est accordée à un multiple ou un sous-multiple de la longueur d'onde du rayonnement de fréquence 2,45 GHz, de sorte à former un dispositif de captation du rayonnement micro-onde d'invalidation de la puce électronique. Ainsi, à titre d'exemple non limitatif, sa longueur sera de 122 mm et sa largeur de 1 mm.

L'élément catalyseur sera à proximité immédiate de la substance active, en contact direct ou encore mélangé à celle-ci : un maximum de l'énergie thermique produite par le catalyseur sous irradiation doit être transféré à la substance active. Les essais réalisés ont permis de démontrer que l'échauffement de l'élément catalyseur suite à l'exposition aux micro-ondes dans le laps de temps visé de quelques secondes ne provoquait aucune dégradation par combustion du document.

Bien entendu, les propriétés conductrices des matériaux constitutifs du catalyseur et le dimensionnement de celui-ci seront ajustés par l'homme de l'art en fonction des substances actives auxquelles le catalyseur sera associé.

Selon une première variante préférée de l'invention, la substance active est apte à changer de couleur sous l'effet d'un rayonnement micro-ondes en passant d'une forme non π-conjuguée à une forme π-conjuguée.

Selon une première forme d'exécution préférée de cette première variante, la substance active possède une formule générale (0) du type : 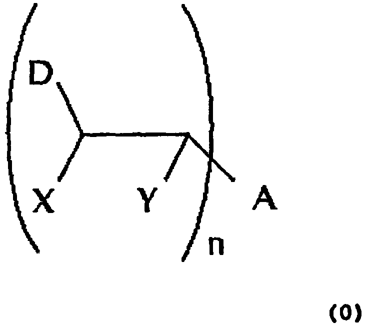 dans laquelle :
- D est un groupement donneur d'électrons par effet mésomère et/ou inductif,
- A est un groupement accepteur d'électrons par effet mésomère et/ou inductif,
- X et Y sont deux groupements susceptibles d'être éliminés sous forme d'une molécule XY sous l'effet d'un rayonnement micro-onde externe,
- n est un entier.

Selon une variante de cette première forme d'exécution de l'invention, la substance active possède la formule générale (1) : 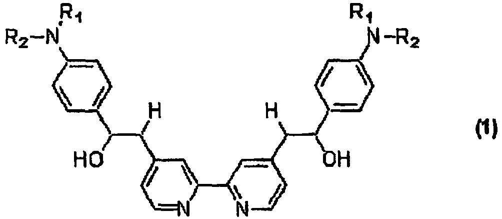 dans laquelle R1 et R2 sont des radicaux alkyles, cycloalkyles, aryles, identiques ou différents.

Selon une autre variante de cette première forme d'exécution de l'invention, la substance active possède la formule générale (2) : 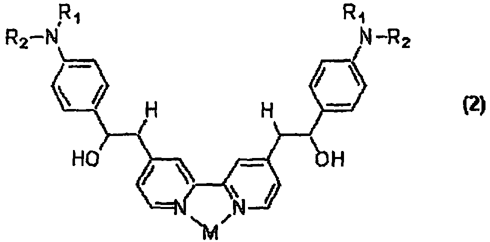 dans laquelle R1 et R2 sont des radicaux alkyles, cycloalkyles, aryles, identiques ou différents, et M est un sel métallique.

Selon une variante préférée des formules (1) et (2), R1 et R2 sont choisis parmi les radicaux éthyles ou butyles ; le sel métallique est choisi parmi ZnCl₂ ou Re(CO)₃Br.

Selon une variante préférée de cette première forme d'exécution de l'invention, la substance active possède la formule générale (3) :

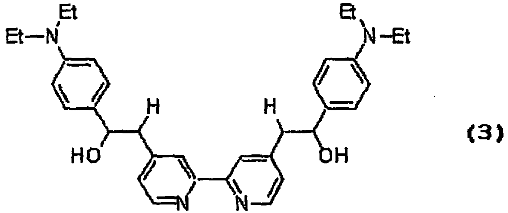

Pour plus de détails sur les composés répondant aux formules (0) à (3), notamment sur leurs variantes ainsi que pour des exemples de synthèse de tels composés, l'homme de l'Art se référera avantageusement à la demande internationale de brevet publiée sous le numéro W02006/042967.

Selon une seconde forme d'exécution préférée de la première variante de l'invention, la substance active comprend un complexe d'un métal chargé positivement et lié à plusieurs ligands, lesdits ligands répondant à la formule(0) définie ci-dessus, dans laquelle le groupement A est lié au métal chargé positivement.

En particulier, la substance active répond alors à l'une des formules (4) ou (5) suivantes : 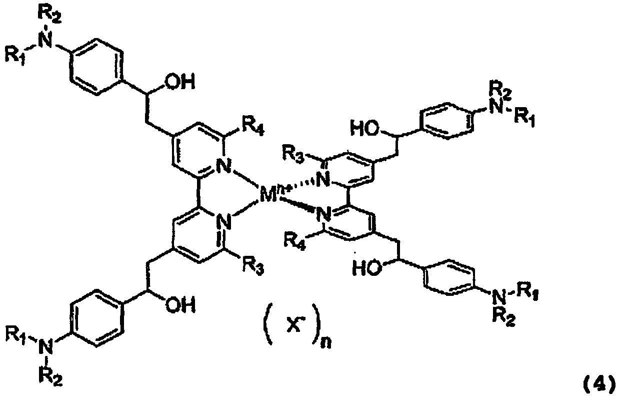 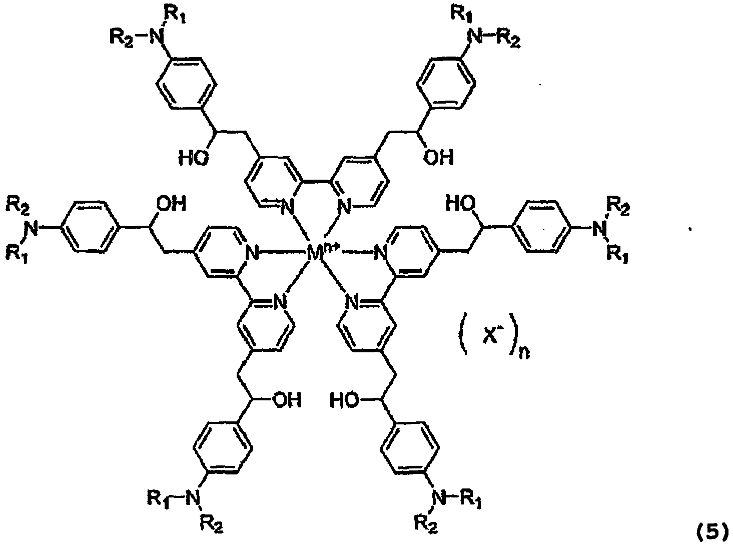 dans lesquelles :
- R₁, R₂, R₃ et R₄ sont choisis parmi les radicaux alkyles, cycloalkyles, et aryles,
- M désigne un métal
- X⁻ est un contre ion, et
- n est un nombre entier.

En particulier, R1 et R2 désignent un radical éthyle ou butyle, et R3 et R4 désignent un radical méthyle ou phényle.

Le métal est indifféremment choisi parmi tout métal connu. En particulier, le métal est choisi parmi Zn, Ni, Co, et Cu.

Le contre ion X peut être choisi parmi AcO⁻, l'ion triflate, NO₃⁻, PF₆⁻ et l'ion trisphate.

Le triflate et le trisphate répondent aux formules suivantes :

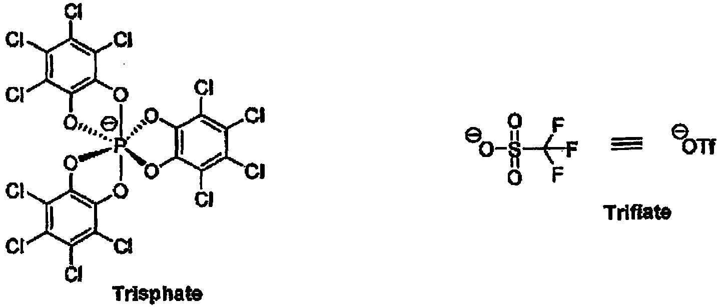

On notera en outre que les molécules selon les formule (0) à (5) présentent, suite à leur exposition aux micro-ondes et leur transformation, une fluorescence sous UV à 365 nm. Cette caractéristique en plus du changement de couleur visible qui s'est produit permet en outre de confirmer avantageusement de façon simple et rapide cette exposition aux micro-ondes et la tentative d'invalidation de la puce RFID en recourant à un dispositif d'inspection UV classiquement utilisé pour vérifier l'authenticité de documents fiduciaires, notamment.

Selon une seconde variante préférée de l'invention, la substance active est apte à libérer un gaz suite à une réaction chimique de ladite substance active déclenchée par ledit rayonnement micro-ondes d'invalidation de la puce électronique auquel elle est exposée, ledit gaz étant libéré dans une quantité et à une vitesse telles que l'aspect des documents est dégradé, cette dégradation rendant identifiable la tentative d'invalidation de ladite puce électronique.

De préférence, la substance active comprend au moins une fonction apte à libérer une molécule de diazote lors de l'exposition au rayonnement micro-ondes externe, ladite fonction étant choisie parmi le groupe comprenant les fonctions diazoïque, diazonium et azoture.

Des exemples de substances actives répondant à cette définition sont décrites dans la demande de brevet française FR06.09074, publiée FR2907137, au nom de la demanderesse, dont le contenu est ici incorporé par référence.

En particulier, la substance active est une molécule possédant au moins une fonction diazoïque et répondant à la formule (6): 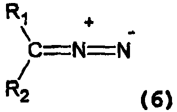 dans laquelle R₁ et R₂, identiques ou différents, représentent indépendamment l'un de l'autre un radical alkyle, cycloalkyle, un cycle aromatique, un cycle hétéroaromatique, substitués ou non par des groupements hétéroatomiques, qui peuvent comprendre eux-mêmes au moins une fonction choisie parmi le groupe comprenant les fonctions diazoïque, diazonium et azoture.

Selon une autre variante, la substance active est une molécule possédant au moins une fonction diazonium et répondant à la formule (7): 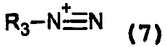 dans laquelle R₃ représente un radical alkyle, cycloalkyle, un cycle aromatique, un cycle hétéroaromatique, substitués ou non par des groupements hétéroatomiques, qui peuvent comprendre eux-mêmes au moins une fonction choisie parmi le groupe comprenant les fonctions diazoïque, diazonium et azoture.

Selon une autre variante, la substance active est une molécule possédant au moins une fonction azoture et répondant à la formule (8): 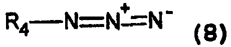 dans laquelle R₄ représente un métal alcalin choisi parmi le groupe comprenant le sodium, le potassium et le lithium, un radical alkyle, cycloalkyle, un cycle aromatique, un cycle hétéroaromatique, substitués ou non par des groupements hétéroatomiques, qui peuvent comprendre eux-mêmes au moins une fonction choisie parmi le groupe comprenant les fonctions diazoïque, diazonium et azoture.

Les groupements hétéroatomiques tels que définis ci-dessus dans les formules (6), (7) et (8), comportent des fonctions choisies parmi le groupe comprenant les fonctions ester, éther, alcool, amino, thiol, acide carboxylique, nitrile, aldéhyde, nitro, et halogène.

Par exemple, pour les substances actives répondant à la formule (8), on peut utiliser des substances actives répondant à la formule (8a) ou la formule (8b):

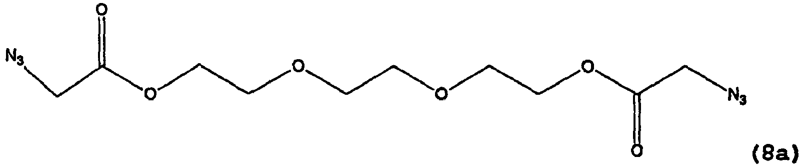

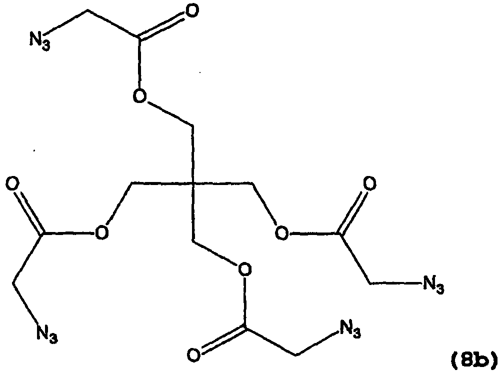

Selon une variante de l'invention, l'intégration aux documents avec dispositif RFID des constituants des ensembles de révélation d'exposition, à savoir la substance active et l'élément catalyseur, est réalisée par incorporation desdits constituants à au moins un des éléments constitutifs desdits documents. Par exemple, la substance active ou l'élément catalyseur sont incorporés au support de base des documents, ledit support pouvant être en papier ou en plastique (par exemple PVC, PE, PET, PC).

De manière avantageuse, l'élément catalyseur pourra être constitué par l'antenne elle-même du dispositif de radioidentification.

Selon une autre variante, la substance active est incorporée à un vernis recouvrant lesdits documents avec dispositif RFID, par exemple un vernis de surimpression déposé sur les documents à sécuriser. Les substances actives utilisées dans la présente invention sont incolores ou faiblement colorées et sont donc imperceptible à l'état latent.

Selon une autre variante, la substance active et l'élément catalyseur sont incorporés à une encre imprimée sur lesdits documents avec dispositif RFID, que l'encre soit offset, sérigraphique, flexographique, héliogravure, typographique, ou jet d'encre, mais également de tout type de matière adaptée et appliquée sur le document. Notamment, l'encre utilisée peut être une encre de type taille-douce. On pourra ainsi avantageusement créer un motif ou un texte sur le document d'identité, qui sera révélé suite à une exposition à un rayonnement micro-onde, en changeant de couleur ou par fluorescence sous UV par exemple, et identifiable à des fins légales.

Selon une autre variante, la substance active et l'élément catalyseur sont incorporés ou imprimés dans un adhésif de protection ou un film de protection laminable sur ledit document.

La présente invention concerne également un document d'identité dit « électronique », tel que passeport, carte d'identité ou permis de conduire, comportant un dispositif de radioidentification renfermant des informations relatives au titulaire dudit document remarquable en ce qu'il comporte un système antifalsification tel que défini précédemment.

Tous les types de format et de support de ces documents d'identité électroniques sont concernés, du document en papier à filigrane plastifié, en passant par le livret cousu, à celui en matière synthétique, en particulier au format carte de crédit, du type carte à puce sans contact.

L'exemple suivant illustre la présente invention sans toutefois en limiter la portée.

Préparation d'une substance active selon la formule (5)

On prépare un composé selon la formule (5) ci-dessus dans laquelle R1 et R2 sont un radical éthyle et le métal M est Zn.

Dans un ballon de 250 ml, 1 équivalent de ZnX2, X-étant le contre ion, est solubilisé dans un minimum d'eau distillée et 3 équivalents de composé de formule A1 également donnée plus bas, dans un minimum de dichlorométhane distillé. Le mélange est maintenu sous très forte agitation pendant 24 heures.

Le composé de formule A1 est la 4,4'-bisdiéthylaminophényle (hydroxyéthyle)-2,2'-bipyridine. La synthèse de ce composé est notamment décrite dans le document "Design and Synthesis of 4,4'-p Conjugated-(2,2']-Bipyridine: a Versatile Class of Tunable Chromophores and Fluorophores." publié en 2001 dans la revue New J.Chem, n°25, pages 1553 à 1566*.*

Dans le cas où du Zn(OTf)2 est utilisé, il est préférable d'ajouter de la diisopropylamine pour éviter l'acidité résiduelle due à l'acide triflique (HOTf).

En fin de réaction, la phase organique est séparée de la phase aqueuse, la phase organique étant réduite à l'évaporateur rotatif. Le solide jaune obtenu est purifié dans l'éthanol absolu froid et par filtration sur verre fritté. Le filtrat est évaporé à l'aide d'un évaporateur rotatif. On obtient un solide jaune orangé. La pureté du composé est vérifiée à l'aide grâce à des analyses physico-chimiques (UV, micro-analyse, RMN). Cette poudre peut être directement utilisée pour doper un véhicule par exemple un vernis ou des encres offset et taille-douce.

Pour obtenir le complexe cationique avec le contre ion trisphate, un simple échange d'ion est effectué entre le complexe-OAc et le trisphate de sodium dans du dichlorométhane pendant 2h.

La synthèse du trisphate de sodium est décrite dans la revue J. Org. Chem. 2004, 69, 8521-8524*.*

## Revendications

1. Système antifalsification pour documents munis d'un dispositif de radioidentification, ledit dispositif étant constitué d'une antenne reliée à une puce électronique renfermant des informations relatives audit document, par exemple les données biométriques du détenteur d'un document d'identité tel qu'un passeport, une carte d'identité ou un permis de conduire, ladite puce étant susceptible d'être rendue inopérante, à des fins frauduleuses, suite à son exposition à un rayonnement micro-onde d'une durée de quelques secondes, le système comprenant, sur ou dans ledit document, un ou plusieurs ensemble(s) de révélation d'exposition aux micro-ondes, chaque ensemble étant constitué :
- d'une part, d'une substance active apte à passer de manière visible et irréversible d'un premier état stable à un second état stable par réaction chimique déclenchée par un rayonnement micro-onde, cette transformation entraînant une modification physique définitive du document et rendant identifiable la tentative d'invalidation de ladite puce électronique suite à son exposition à un rayonnement micro-onde et,
- d'autre part, d'un élément catalyseur réalisé en matériaux conducteurs, destiné à rendre effective et totale la réaction de transformation de la substance active sur la durée minimale d'exposition aux micro-ondes nécessaire à l'invalidation de ladite puce électronique.

2. Système antifalsification selon la revendication 1, **caractérisé en ce que** les matériaux conducteurs de l'élément catalyseur sont choisis parmi : les métaux, les matériaux semi-conducteurs, les nanotubes de carbone.

3. Système antifalsification selon l'une quelconque des revendication 1 à 2, **caractérisé en ce que** l'élément catalyseur se présente sous la forme d'une antenne linéaire réalisée par sérigraphie avec une encre conductrice à base d'argent, de cuivre ou de carbone.

4. Système antifalsification selon la revendication précédente, **caractérisé en ce que** l'élément catalyseur comporte à l'une des extrémités de l'antenne une charge terminale adaptée à l'impédance caractéristique de celle-ci, ladite charge étant réalisée par un dépôt sérigraphique de carbone conducteur et/ou d'argent.

5. Système antifalsification selon l'une quelconque des revendications 3 ou 4, **caractérisé en ce que** l'antenne linéaire est accordée à un multiple ou un sous-multiple de la longueur d'onde du rayonnement de fréquence 2,45 GHz, de sorte à former un dispositif de captation du rayonnement micro-onde destiné à invalider la puce électronique.

6. Système antifalsification selon l'une quelconque des revendication 1 ou 2, **caractérisé en ce que** l'élément catalyseur est constitué par l'antenne du dispositif de radioidentification.

7. Système antifalsification selon l'une quelconque des revendication 1 à 6, **caractérisé en ce que** la substance active est apte à changer de couleur sous l'effet d'un rayonnement micro-ondes en passant d'une forme non π-conjuguée à une forme π-conjuguée.

8. Système antifalsification selon la revendication précédente, **caractérisé en ce que** la substance active possède une formule générale (0) du type : 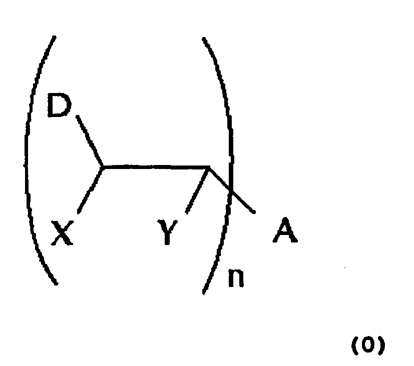 dans laquelle :
- D est un groupement donneur d'électrons par effet mésomère et/ou inductif,
- A est un groupement accepteur d'électrons par effet mésomère et/ou inductif,
- X et Y sont deux groupements susceptibles d'être éliminés sous forme d'une molécule XY sous l'effet d'un rayonnement micro-onde externe,
- n est un entier.

9. Système antifalsification selon la revendication 8, **caractérisé en ce que** la substance active comprend un complexe d'un métal chargé positivement et lié à plusieurs ligands, lesdits ligands répondant à la formule(0) définie ci-dessus, dans laquelle le groupement A est lié au métal chargé positivement.

10. Système antifalsification selon la revendication précédente, **caractérisé en ce que** la substance active répond à l'une des formules (4) ou (5) suivantes : 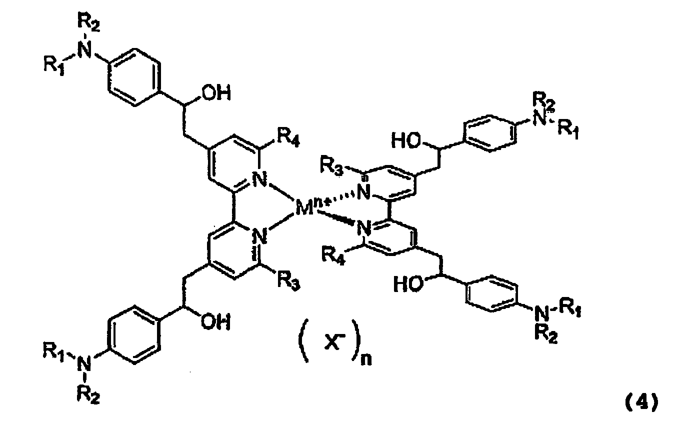 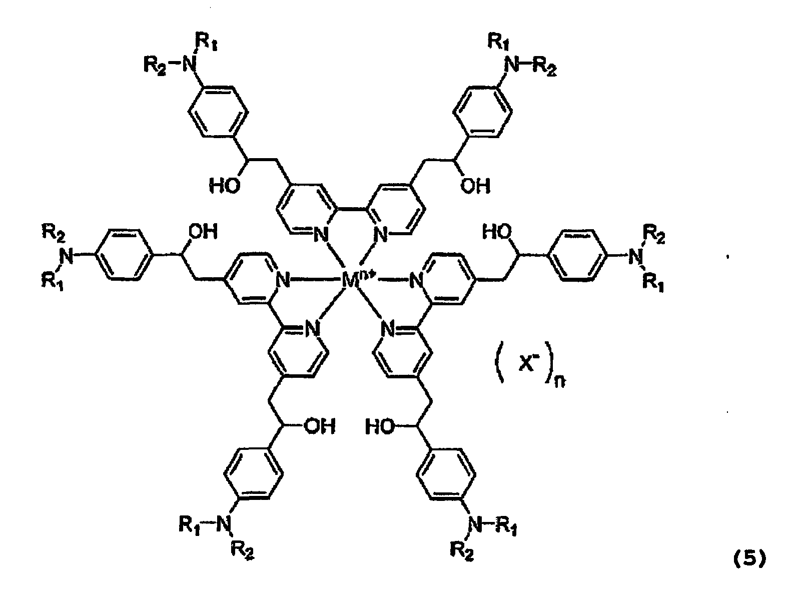 dans lesquelles :
- R₁, R₂, R₃ et R₄ sont choisis parmi les radicaux alkyles, cycloalkyles, et aryles,
- M désigne un métal
- X⁻ est un contre ion, et
- n est un nombre entier.

11. Système antifalsification selon l'une quelconque des revendication 1 à 6, **caractérisé en ce que** la substance active est apte à libérer un gaz suite à une réaction chimique de ladite substance active déclenchée par ledit rayonnement micro-ondes d'invalidation de la puce électronique auquel elle est exposée, ledit gaz étant libéré dans une quantité et à une vitesse telles que l'aspect des documents est dégradé, cette dégradation rendant identifiable l'invalidation de ladite puce électronique.

12. Système antifalsification selon la revendication précédente, **caractérisé en ce que** la substance active comprend au moins une fonction apte à libérer une molécule de diazote lors de l'exposition au rayonnement micro-ondes externe, ladite fonction étant choisie parmi le groupe comprenant les fonctions diazoïque, diazonium et azoture.

13. Document d'identité comportant un dispositif de radioidentification renfermant des informations relatives au titulaire dudit document **caractérisé en ce qu'**il comporte un système antifalsification selon l'une quelconque des revendications précédentes.

## Claims

1. Anti-counterfeit system for documents provided with a radio-identification device, said device consisting of an antenna connected to an electronic chip containing information relating to said document, for example the biometric data of the bearer of an identity document such as a passport, an identity card or a driving licence, said chip being capable of being invalidated, for fraudulent purposes, following the exposure thereof to microwave radiation for a period of a few seconds, the system comprising on or in said document, one or a plurality of microwave exposure detection set(s), each set consisting of:
- firstly, an active substance suitable for switching visibly and irreversibly from a first stable state to a second stable state by means of a chemical reaction triggered by microwave radiation, this conversion inducing a definitive physical modification of the document and enabling the identification of the attempt to invalidate said electronic chip following the exposure thereof to microwave radiation and,
- secondly, a catalyst element made of conductive materials, intended to implement and complete the active substance conversion reaction over the minimum microwave exposure time required to invalidate said electronic chip.

2. Anti-counterfeit system according to claim 1, **characterised in that** the conductive materials of the catalyst element are chosen from: metals, semiconductor materials, carbon nanotubes.

3. Anti-counterfeit system according to any of claims 1 to 2, **characterised in that** the catalyst element is in the form of a linear antenna produced by screen-printing with a silver, copper or carbon-based conductive ink.

4. Anti-counterfeit system according to the above claim, **characterised in that** the catalyst element comprises at one of the ends of the antenna a terminal load suitable for the characteristic impedance thereof, said load being produced by means of screen-printed deposition of conductive carbon and/or silver.

5. Anti-counterfeit system according to any of claims 3 or 4, **characterised in that** the linear antenna is tuned to a multiple or a submultiple of the wavelength of the radiation having the frequency 2.45 GHz, so as to form a device for capturing the microwave radiation for invalidating the electronic chip.

6. Anti-counterfeit system according to any of claims 1 or 2, **characterised in that** the catalyst element consists of the radio-identification device antenna.

7. Anti-counterfeit system according to any of claims 1 to 6, **characterised in that** the active substance is suitable for changing colour under the effect of microwave radiation by changing from a non-π-conjugated form to a π-conjugated form.

8. Anti-counterfeit system according to the above claim, **characterised in that** the active substance has a general formula (0) of the following type: 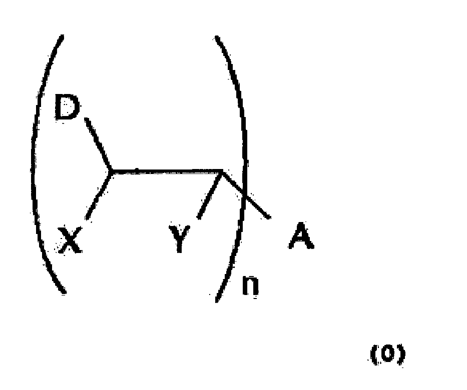 wherein:
- D is an electron donor group by means of a mesomeric and/or inductive effect,
- A is an electron acceptor group by means of a mesomeric and/or inductive effect,
- X and Y are two groups suitable for being removed in the form of an XY molecule under the effect of external microwave radiation,
- n is an integer.

9. Anti-counterfeit system according to claim 8, **characterised in that** active substance comprises a complex of a positively charged metal bound to a plurality of ligands, said ligands complying with formula (0) defined above, wherein group A is bound to the positively charged metal.

10. Anti-counterfeit system according to the above claim, **characterised in that** the active substance complies with any of the following formulas (4) or (5): 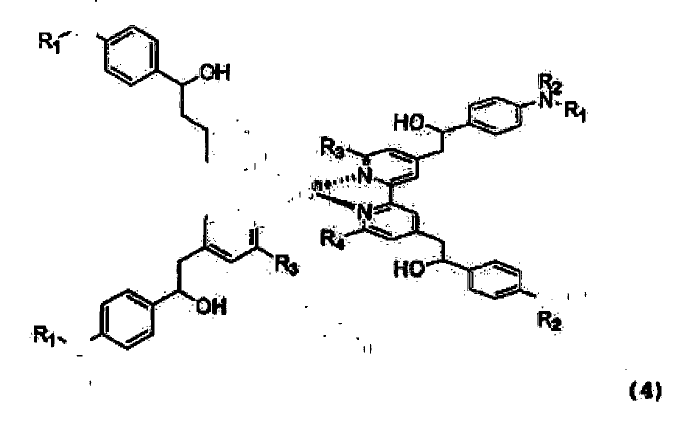 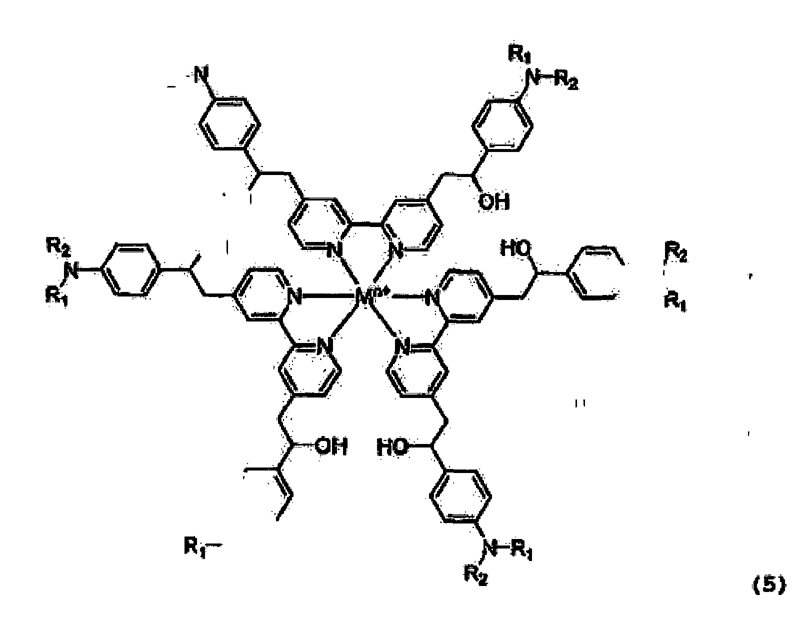 wherein:
- R₁, R₂, R₃ and R₄ are chosen from alkyl, cycloalkyl and aryl radicals,
- M refers to a metal
- X⁻ is a counterion, and
- n is an integer.

11. Anti-counterfeit system according to any of claims 1 to 6, **characterised in that** the active substance is suitable for releasing a gas following a chemical reaction of said active substance triggered by said microwave radiation for invalidating the electronic chip to which it is exposed, said gas being released in a quantity and at a rate such that the appearance of the documents is degraded, this degradation enabling the identification of the invalidation of said electronic chip.

12. Anti-counterfeit system according to the above claim, **characterised in that** the active substance comprises at least one function suitable for releasing a dinitrogen molecule following exposure to external microwave radiation, said function being chosen from the group comprising the diazoic, diazonium and azide functions.

13. Identity document comprising a radio-identification device containing information relating to the bearer of said document **characterised in that** it comprises an anti-counterfeit system according to any of the above claims.

## Patentansprüche

1. Fälschungsschutzsystem für Dokumente, ausgestattet mit einer Funkidentifikationsvorrichtung, wobei die Vorrichtung aus einer Antenne besteht, die mit einem elektronischen Chip verbunden ist, der Informationen mit Bezug auf das Dokument enthält, z.B. die biometrischen Daten des Inhabers eines Identitätsdokuments wie z.B. eines Reisepasses, einer Identitätskarte oder eines Führerscheins, wobei der Chip nach seiner Aussetzung an eine Mikrowellenstrahlung mit einer Dauer von einigen Sekunden für betrügerische Zwecken unwirksam gemacht werden kann, wobei das System, auf oder in dem Dokument, eine oder mehrere Einheit(en) zur Aufdeckung der Aussetzung an die Mikrowellen umfasst, wobei jede Einheit Folgendes umfasst:
- einerseits einen Wirkstoff, der ausgelegt ist, um auf sichtbare und unumkehrbare Weise von einem ersten stabilen Zustand in einen zweiten stabilen Zustand durch eine chemische Reaktion überzugehen, die durch eine Mikrowellenstrahlung ausgelöst wird, wobei diese Umwandlung eine definitive physische Veränderung des Dokuments zur Folge hat und den Versuch, den elektronischen Chip nach seiner Aussetzung an eine Mikrowellenstrahlung zu annullieren, identifizierbar macht, und
- andererseits ein Katalysatorelement, das aus leitenden Materialien hergestellt ist, dazu ausgelegt, die Umwandlungsreaktion des Wirkstoffs bei der minimalen Dauer der Aufsetzung an die Mikrowellen, die erforderlich ist, um den elektronischen Chip zu annullieren, wirksam und vollständig zu machen.

2. Fälschungsschutzsystem nach Anspruch 1, **dadurch gekennzeichnet, dass** die leitenden Materialien des Katalysatorelements ausgewählt sind aus: Metallen, halbleitenden Materialien, Kohlenstoff-Nanoröhren.

3. Fälschungsschutzsystem nach einem der Ansprüche 1 bis 2, **dadurch gekennzeichnet, dass** das Katalysatorelement die Form einer linearen Antenne aufweist, hergestellt durch Serigrafie mit einer leitenden Tinte auf der Grundlage von Silber, Kupfer oder Kohlenstoff.

4. Fälschungsschutzsystem nach dem vorhergehenden Anspruch 1, **dadurch gekennzeichnet, dass** das Katalysatorelement an einem der Enden der Antenne eine Abschlusslast umfasst, die an die charakteristische Impedanz davon angepasst ist, wobei die Last durch eine serigrafische Ablage von leitendem Kohlenstoff und/oder Silber durchgeführt ist.

5. Fälschungsschutzsystem nach einem der Ansprüche 3 oder 4, **dadurch gekennzeichnet, dass** die lineare Antenne auf ein Vielfaches oder ein Untervielfaches der Wellenlänge der Strahlung mit der Frequenz 2,45 GHz angepasst ist, um eine Vorrichtung zur Erfassung der Mikrowellenstrahlung zu bilden, dazu ausgelegt ist, den elektronischen Chip ungültig zu machen

6. Fälschungsschutzsystem nach einem der Ansprüche 1 oder 2, **dadurch gekennzeichnet, dass** das Katalysatorelement aus der Antenne der Funkidentifizierungsvorrichtung besteht.

7. Fälschungsschutzsystem nach einem der Ansprüche 1 bis 6, **dadurch gekennzeichnet, dass** der Wirkstoff ausgelegt ist, unter der Einwirkung einer Mikrowellenstrahlung die Farbe zu ändern, durch den Übergang von einer nicht π-konjugierten Form in eine π-konjugierte Form.

8. Fälschungsschutzsystem nach dem vorhergehenden Anspruch, **dadurch gekennzeichnet, dass** der Wirkstoff eine allgemeine Formel (0) des folgenden Typs aufweist: 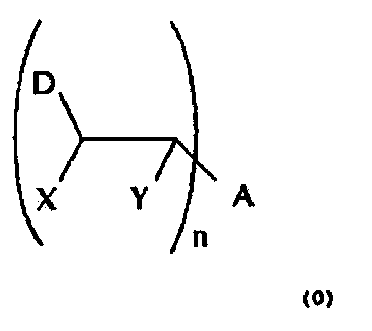 wobei:
- D eine Elektronendonorgruppe durch mesomere und/oder induktive Wirkung ist,
- A eine Elektronenakzeptorgruppe durch mesomere und/oder induktive Wirkung ist,
- X und Y zwei Gruppen sind, die in der Form eines XY-Moleküls unter der Einwirkung einer externen Mikrowellenstrahlung eliminiert werden können,
- n eine ganze Zahl ist.

9. Fälschungsschutzsystem nach Anspruch 8, **dadurch gekennzeichnet, dass** der Wirkstoff einen Komplex eines positiv geladenen und an mehrere Liganden gebundenen Metalls umfasst, wobei die Liganden der Formel (0) entsprechen, die oben definiert ist, in der die Gruppe A mit dem positiv geladenen Metall verbunden ist.

10. Fälschungsschutzsystem nach dem vorhergehenden Anspruch 1, **dadurch gekennzeichnet, dass** der Wirkstoff einer der folgenden Formeln (4) oder (5) entspricht: 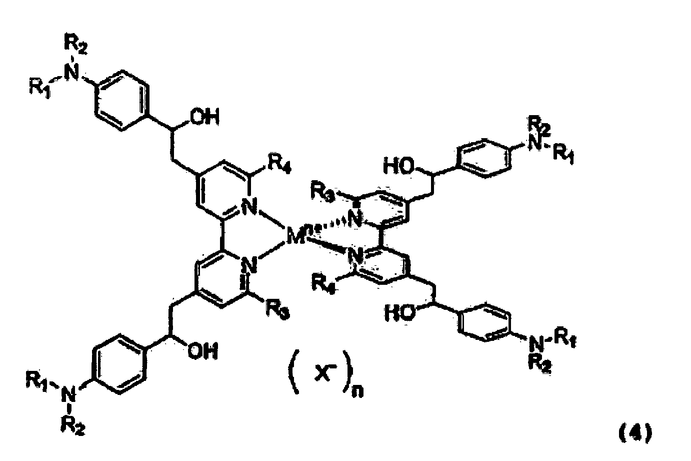 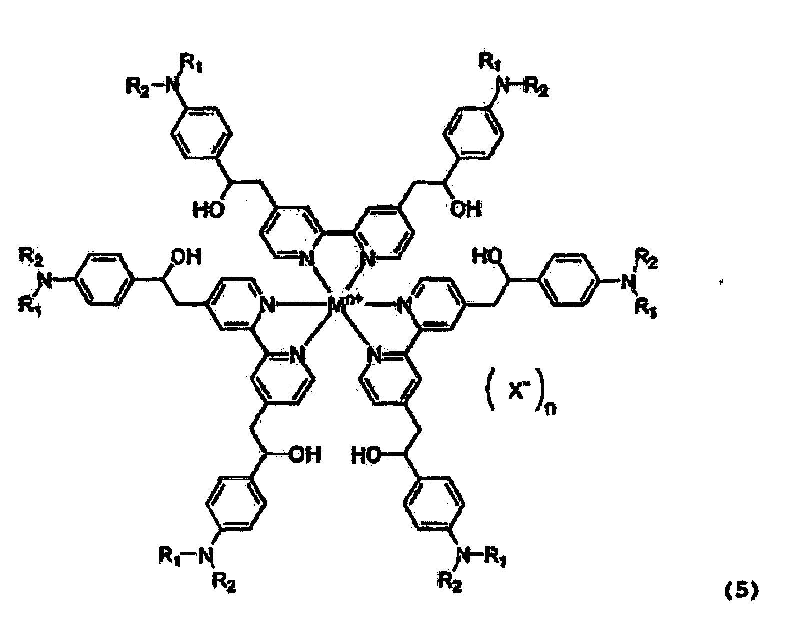 wobei:
R₁, R₂, R₃ und R₄ aus den Alkyl-, Coalkyl- und Arylradikalen ausgewählt sind,
- M ein Metall bezeichnet
- X- ein Gegenion ist, und
- n eine ganze Zahl ist.

11. Fälschungsschutzsystem nach einem der Ansprüche 1 bis 6, **dadurch gekennzeichnet, dass** der Wirkstoff aufgelegt ist, um nach einer chemischen Reaktion des Wirkstoffs, ausgelöst durch die Mikrowellenstrahlung zur Annullierung des elektronischen Chips, dem er ausgesetzt ist, ein Gas freizusetzen, wobei das Gas in einer derartigen Menge und mit einer derartigen Geschwindigkeit freigesetzt wird, dass das Aussehen der Dokumente beschädigt wird, wobei diese Beschädigung die Annullierung des elektronischen Chips identifizierbar macht.

12. Fälschungsschutzsystem nach dem vorhergehenden Anspruch, **dadurch gekennzeichnet, dass** der Wirkstoff mindestens eine Funktion umfasst, die dazu ausgelegt ist, bei der Aussetzung an die externe Mikrowellenstrahlung ein Distickstoffmolekül freizusetzen, wobei die Funktion aus der Gruppe ausgewählt ist, bestehend aus der Diazo-, Diazonium- und Nitridfunktion.

13. Identitätsdokument, umfassend eine Vorrichtung zur Funkidentifikation, die Informationen bezüglich des Inhabers des Dokuments enthält, **dadurch gekennzeichnet, dass** es ein Fälschungsschutzsystem nach einem der vorhergehenden Ansprüche umfasst.
